# FASCICULE DE BREVET EUROPEEN

(11) **EP 4 398 555 B1**
(45) Date de publication et mention de la délivrance du brevet: **27.05.2026**
(21) Numéro de dépôt: 24176672.4
(22) Date de dépôt: 29.06.2015
(51) Int. Cl.: H04L 69/14, H04L 69/16

(54) **PROCÉDÉ DE COMMUNICATION TCP VIA DES CHEMINS MULTIPLES ENTRE DEUX TERMINAUX**
VERFAHREN ZUR TCP-KOMMUNIKATION ÜBER MEHRERE WEGE ZWISCHEN ZWEI ENDGERÄTEN
METHOD FOR TCP COMMUNICATION VIA MULTIPLE PATHS BETWEEN TWO TERMINALS

(30) Priorité: 30.06.2014 FR 1456166
(43) Date de publication de la demande: 10.07.2024
(62) Demande divisionnaire de: 22203119.7
(73) Titulaire: Orange, 92130 Issy-les-Moulineaux (FR)
(72) Inventeur: BOUCADAIR, Mohamed, 92326 Chatillon (FR); JACQUENET, Christian, 92326 Chatillon (FR)

(56) Documents cités:
- WING R RAVINDRANATH T REDDY CISCO A FORD UNAFFILIATED R PENNO CISCO D: "Multipath TCP (MPTCP) Path Selection using PCP; draft-wing-mptcp-pcp-00.txt", MULTIPATH TCP (MPTCP) PATH SELECTION USING PCP; DRAFT-WING-MPTCP-PCP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 October 2013 (2013-10-07), pages 1 - 10, XP015095076
- FORD CISCO C RAICIU U POLITECHNICA OF BUCHAREST M HANDLEY U COLLEGE LONDON O BONAVENTURE U CATHOLIQUE DE LOUVAIN A: "TCP Extensions for Multipath Operation with Multiple Addresses; rfc6824.txt", TCP EXTENSIONS FOR MULTIPATH OPERATION WITH MULTIPLE ADDRESSES; RFC6824.TXT, INTERNET ENGINEERING TASK FORCE, IETF; STANDARD, INTERNET SOCIETY (ISOC) 4, RUE DES FALAISES CH- 1205 GENEVA, SWITZERLAND, 17 January 2013 (2013-01-17), pages 1 - 64, XP015086539
- DENG D LIU T SUN CHINA MOBILE M BOUCADAIR FRANCE TELECOM G CAUCHIE BOUYGUES TELECOM L: "Use-cases and Requirements for MPTCP Proxy in ISP Networks; draft-deng-mptcp-proxy-00.txt", USE-CASES AND REQUIREMENTS FOR MPTCP PROXY IN ISP NETWORKS; DRAFT-DENG-MPTCP-PROXY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 May 2014 (2014-05-29), pages 1 - 18, XP015099305
- HAMPEL T KLEIN ALCATEL-LUCENT G: "MPTCP Proxies and Anchors; draft-hampel-mptcp-proxies-anchors-00.txt", MPTCP PROXIES AND ANCHORS; DRAFT-HAMPEL-MPTCP-PROXIES-ANCHORS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 February 2012 (2012-02-08), pages 1 - 30, XP015080543
- M BOUCADAIR: "MPTCP Connectivity Checks", 4 March 2015 (2015-03-04), XP055180730, Retrieved from the Internet <URL:http://tools.ietf.org/pdf/draft-boucadair-mptcp-connectivity-checks-00.pdf> [retrieved on 20150401]
- BOUCADAIR C JACQUENET FRANCE TELECOM M: "Discovering the Capabilities of Flow-Aware Service Functions (a.k.a. Middleboxes): A PCP-based Approach; draft-boucadair-hops-capability-discovery-00.txt", DISCOVERING THE CAPABILITIES OF FLOW-AWARE SERVICE FUNCTIONS (A.K.A. MIDDLEBOXES): A PCP-BASED APPROACH; DRAFT-BOUCADAIR-HOPS-CAPABILITY-DISCOVERY-00.TXT, INTERNET ENGINEERING TASK FORCE, IETF; STANDARDWORKINGDRAFT, INTERNET SOCIETY (ISOC) 4, RUE DES, 30 June 2015 (2015-06-30), pages 1 - 12, XP015107020
- BOUCADAIR C JACQUENET FRANCE TELECOM M: "Probing MPTCP Subflows; draft-boucadair-mptcp-probe-subflow-00.txt", PROBING MPTCP SUBFLOWS; DRAFT-BOUCADAIR-MPTCP-PROBE-SUBFLOW-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1 - 7, XP015107253

## Description

La présente invention concerne le domaine des télécommunications, et notamment les réseaux de communications aptes à mettre en œuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

L'invention s'applique à tout type de dispositif-client tel qu'un terminal fixe ou mobile, ou une passerelle domestique (« *Residential Gateway* » en anglais), ou une passerelle située dans une entreprise, ou une passerelle d'opérateur réseau (« *Gateway* » en anglais), ou encore un décodeur TV (« *Set-Top Box* », ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multiinterfaces » (« *Multi-interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address,* ou ULA en anglais), ou adresse IPv6 de portée globale (*Global Unicast Address,* ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une connexion avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

On rappelle qu'une « connexion à chemins multiples » est une connexion établie entre deux dispositifs empruntant simultanément un ou plusieurs chemins entre ces deux dispositifs. Une telle connexion obéit à un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une connexion à chemins multiples est un agrégat d'une ou plusieurs connexions simples empruntant un même chemin ou des chemins différents (partiellement ou complètement disjoints).

On rappelle également que le protocole TCP, défini notamment dans la spécification RFC 793 de l'IETF (Internet Engineering Task Force), est l'un des protocoles principaux utilisé par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Il fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que l'adresse et le numéro de port du terminal de destination.

Deux terminaux peuvent insérer des « options TCP » dans les messages TCP échangés entre eux, afin, par exemple, d'optimiser la qualité de la transmission TCP. De telles options occupent l'espace disponible en fin d'en-tête TCP, et ont une longueur (« *length* » en anglais) exprimée en octets. Le type (« *kind* » en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

L'avènement des terminaux MIF introduit une complexité supplémentaire pour utiliser tout ou partie des adresses IP allouées via les réseaux disponibles. Notamment, étant donné que les connexions TCP sont associées à une adresse IP et un numéro de port, toute modification d'au moins l'une de ces informations est de nature à pénaliser le fonctionnement d'une connexion TCP en cours, et, partant, le service utilisant ladite connexion TCP. Ce changement est particulièrement préjudiciable lorsque le terminal se voit attribuer une nouvelle adresse IP, ou parce que le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante.

Le groupe de travail *mptcp* de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013), que certains téléphones intelligents et certains systèmes d'exploitation sont déjà capables de mettre en œuvre. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP liés à de telles modifications d'adressage, et plus généralement pour répondre aux exigences posées par un contexte où un terminal a la capacité de se raccorder à un, ou plusieurs réseau(x) via une ou plusieurs interfaces. Le protocole MPTCP répond notamment au besoin d'assurer une continuité de session en cas de mobilité du terminal. Différents cas d'usage peuvent être envisagés pour le protocole MPTCP, tels que :
- transférer du trafic entre plusieurs points d'accès WLAN,
- décharger un réseau mobile, et basculer le trafic vers un point d'accès WLAN,
- agréger plusieurs liens d'accès,
- répartir la charge entre plusieurs chemins, et
- optimiser l'utilisation des ressources réseau.
On rappelle à cet égard (cf. Wikipedia) que « l'agrégation de liens » est, dans le domaine des réseaux, une notion décrivant le regroupement de plusieurs interfaces réseau comme s'il s'agissait d'une seule, dans le but d'accroître le débit au-delà des limites d'un seul lien, et éventuellement de faire en sorte que d'autres interfaces prennent le relais si un lien réseau tombe en panne (principe de redondance).

Un exemple particulièrement avantageux d'application du protocole MPTCP est le transfert de fichiers volumineux utilisant les ressources du protocole FTP (File Transfer Protocol). Un dispositif agissant en tant que client FTP peut dynamiquement exploiter l'ensemble des chemins disponibles qui lui permettent d'accéder à un serveur FTP, pourvu que ce dernier soit apte à mettre en œuvre les différentes connexions MPTCP établies par le client FTP. Le temps de transfert des données est ainsi significativement réduit par rapport à une connexion TCP.

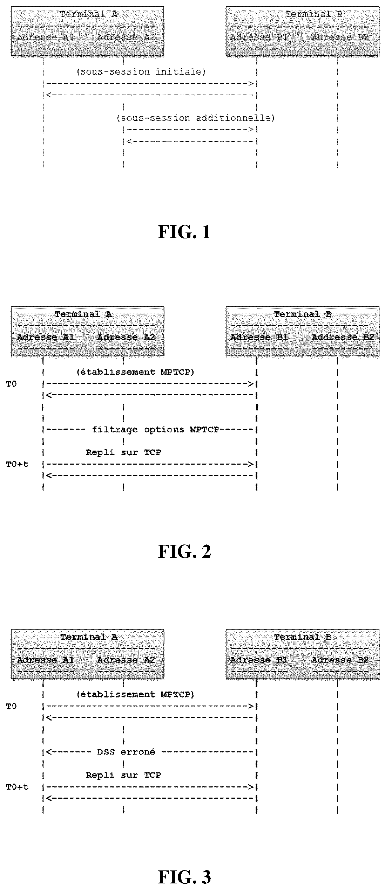

Dans le cadre de MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la **figure** 1 montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B.

Les systèmes d'exploitation présentent aux applications des interfaces dédiées, appelées API (*Application Programming Interface*) pour interagir avec les couches TCP et IP. L'API classique présentée aux applications TCP/IP est l'interface « *socket* ». Une « *socket* » est caractérisée par plusieurs « attributs » tels que « *Local Socket Address* », « *Remote Socket Address* » et « *Protocol* ». De nouvelles extensions (API MPTCP) ont été spécifiées par l'IETF dans le document RFC 6897 pour permettre aux applications de contrôler les connexions MPTCP. On notera que l'API MPTCP est une extension de l'API TCP.

On appelle « table de connexion MPTCP » une structure logicielle utilisée pour grouper toutes les sous-sessions TCP associées à une même connexion MPTCP. Plusieurs attributs peuvent être utilisés pour caractériser une table de connexion MPTCP. En plus des attributs TCP/IP classiques mentionnés ci-dessus, une valeur est donnée à des attributs spécifiques au protocole MPTCP. La valeur de ces attributs de la table de connexion est contrôlée via l'API MPTCP.

Une connexion MPTCP est initialisée comme n'importe quelle connexion TCP classique, à l'exception du fait que l'option MP_CAPABLE (signifiant que le terminal émetteur est compatible avec les extensions MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide de l'option ADD_ADDR, sans nécessairement créer de sous-session associée.

Toutefois, la signalisation de plusieurs adresses IP disponibles et susceptibles d'être utilisées pour communiquer avec un correspondant peut conduire à l'échec de l'établissement de certaines sous-sessions TCP parce que les adresses IP externes telles que perçues par les terminaux distants peuvent ne pas être les mêmes que celles visibles localement. Pour cette raison, l'option ADD_ADDR du protocole MPTCP comprend un identificateur d'adresse (« Address ID ») utilisé pour identifier sans ambiguïté une adresse IP disponible. Cette disposition est censée, selon l'état de l'art, éviter les problèmes induits par la présence d'un NAT (initiales des mots anglais « *Network Address Translator* » signifiant « Traducteur d'Adresse Réseau ») sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi faire face à la prolifération massive de « *middle boxes* » (équipements intermédiaires dans une chaîne de communication), comme les NAT et les pare-feux, dans les réseaux actuels. En outre, il est prévu dans le document RFC 6824 qu'en cas d'échec d'une tentative d'établissement d'une connexion MPTCP, la connexion se transforme automatiquement en une connexion TCP simple.

Malheureusement, en dépit de toutes ces précautions, d'autres problèmes peuvent surgir lors de la tentative d'établissement d'une connexion MPTCP. Par exemple :
- certaines options MPTCP, voire toutes, peuvent être filtrées (c'est-à-dire, retirées) par des nœuds intermédiaires (par exemple, un NAT ou un pare-feu) situées en coupure de flux entre deux pairs MPTCP, comme illustré sur la **figure 2** **;**
- même si les messages SYN MPTCP (mentionnés ci-dessus) sont échangés avec succès entre deux pairs MPTCP, des noeuds intermédiaires peuvent filtrer les options DSS (mentionnées ci-dessus) des paquets de données ; dans ce cas, comme illustré sur la **figure** 3, la tentative d'établissement d'une connexion MPTCP ne peut pas aboutir, avec comme conséquence le repli sur une connexion TCP simple comme dans le cas illustré en référence à la **figure 2** ;
- il peut se produire qu'une première sous-session TCP soit établie avec succès, mais que l'établissement de sous-sessions ultérieures échoue faute de l'existence de chemins multiples compatibles avec les extensions MPTCP.

Or les auteurs de la présente invention ont réalisé que la présence de tels noeuds intermédiaires avait pour effet de prolonger sensiblement le délai d'établissement de sous-sessions TCP et, par conséquent, avait un impact négatif sur la qualité du service de communication, telle que perçue par l'utilisateur.

Le document HAMPEL T KLEIN ACLATEL-LUCENT G : « MPTCP Proxies and Anchors ; draft-hampel-mptep-proxies-anchors-00.ixt », MPTCP Proxies and Anchors ; draft-hampel-mptep-proxies-anchors-00.txt, Internet Engineering Task Force, IETF ; Standardworkingdraft, Internet Society (ISOC) 4 rue des Falaises CH-1205 GENEVA, SWITZERLAND, 8 février 2023 (2012-02-08), pages 1-30, concerne le support de proxys et de nœuds d'ancrage MPTCP dans un réseau.

L'invention concerne un procédé de communication défini dans la revendication 1.

Un mode de réalisation non revendiqué concerne par ailleurs un procédé de communication comprenant les étapes suivantes :
a) un dispositif-client apte à mettre en œuvre une connexion TCP simple ou une connexion à chemins multiples, respectivement un dispositif-relais connecté audit dispositif-client et apte à mettre en œuvre une connexion à chemins multiples, reçoit, en l'absence de toute connexion à chemins multiples entre ledit dispositif-client, respectivement ledit dispositif-relais, et un certain autre dispositif-client, des informations concernant la compatibilité éventuelle avec les connexions à chemins multiples d'au moins un nœud intermédiaire placé sur un chemin reliant le dispositif-client, respectivement ledit dispositif-relais, audit autre dispositif-client, et
b) le dispositif-client ou ledit dispositif-relais enregistre le statut dudit chemin quant à sa compatibilité éventuelle avec les connexions à chemins multiples.

On notera que le procédé de communication selon l'invention peut être mis en oeuvre par tout dispositif-client compatible avec TCP. Ce dispositif-client peut disposer d'une ou plusieurs adresses externes, ou d'une ou plusieurs interfaces réseau (logiques ou physiques). Mais ce dispositif-client peut ne disposer que d'une seule interface s'il est situé derrière un dispositif-relais (tel qu'un routeur ou une passerelle résidentielle) connecté à un ou plusieurs réseau(x) et compatible avec les options TCP à chemins multiples.

Les dispositifs communicants visés (dispositifs-clients et dispositifs-relais) peuvent être de type quelconque, par exemple un terminal, un routeur ou une passerelle résidentielle.

Grâce à l'invention, ces dispositifs communicants peuvent découvrir les capacités d'éventuels « équipements intermédiaires » (tels que mentionnés ci-dessus), et anticiper l'échec de connexions à chemins multiples. Il en résulte une réduction du délai d'établissement de connexions à chemins multiples, et donc évidemment une qualité d'expérience-utilisateur sensiblement améliorée.

De plus, un tel dispositif communicant peut :
- ajuster son comportement en fonction de son attachement réseau (par exemple, en cas d'attachement à un nouveau réseau, d'indisponibilité d'une interface réseau, ou de la détection d'un « équipement intermédiaire »), et
- décider, sans risquer de dégrader la qualité de la communication avec son correspondant, d'activer une connexion à chemins multiples, ou de désactiver une connexion à chemins multiples en cours ou toutes ses connexions à chemins multiples en cours, ou encore d'ajouter une nouvelle sous-session TCP à une connexion à chemins multiples en cours.

Par ailleurs, ladite connexion à chemins multiples pourra avantageusement être conforme au protocole MPTCP, de manière à bénéficier des dispositions, mentionnées succinctement ci-dessus, de ce protocole.

Selon une première variante, lors de ladite étape a), le dispositif-client, respectivement le dispositif-relais, reçoit lesdites informations au sein d'un message non-sollicité diffusé par ledit nœud intermédiaire.

Grâce à ces dispositions, la réception desdites informations par le dispositif-client ou le dispositif-relais est automatique.

Selon une deuxième variante :
- le dispositif-client, respectivement le dispositif-relais, émet une requête à destination dudit nœud intermédiaire, et
- lors de ladite étape a), il reçoit lesdites informations au sein d'un message de réponse émis par le nœud intermédiaire.

Grâce à ces dispositions, le dispositif-client ou le dispositif-relais peut obtenir lesdites informations chaque fois qu'il en a besoin.

On notera qu'un dispositif communicant (tel qu'un dispositif-client ou un dispositif-relais) peut être apte à mettre en œuvre les deux variantes succinctement exposées ci-dessus, ou seulement l'une d'entre elles. Par ailleurs, un dispositif communicant peut utiliser l'une de ces deux variantes pour une partie des chemins multiples disponibles, et utiliser une troisième variante quelconque pour vérifier la compatibilité des autres chemins avec les connexions à chemins multiples ; le dispositif communicant peut notamment procéder ainsi lorsque certains des nœuds intermédiaires découverts ne sont aptes à mettre en œuvre aucune des deux variantes succinctement exposées ci-dessus.

Selon d'autres caractéristiques particulières, si le dispositif-client, respectivement ledit dispositif-relais, constate qu'aucun des chemins reliant le dispositif-client audit autre dispositif-client n'est compatible avec les connexions à chemins multiples, ledit procédé comprend en outre une étape au cours de laquelle le dispositif-client utilise une connexion TCP simple pour :
- établir une connexion avec ledit autre dispositif-client, ou
- se connecter à l'autre dispositif-client, suite à la réception d'un message d'établissement d'une connexion à chemins multiples émis par l'autre dispositif-client.

Grâce à ces dispositions, on évite le délai que pourrait causer une tentative d'établissement d'une connexion à chemins multiples le long d'un chemin incompatible avec une telle connexion.

En revanche, si le dispositif-client, respectivement ledit dispositif-relais, constate qu'au moins l'un des chemins reliant le dispositif-client audit autre dispositif-client est compatible avec les connexions à chemins multiples, ledit procédé comprend en outre une étape au cours de laquelle le dispositif-client, respectivement le dispositif-relais, utilise un protocole de connexion à chemins multiples pour communiquer avec ledit autre dispositif-client le long dudit chemin compatible avec les connexions à chemins multiples.

En particulier, les deux pairs pourront établir entre eux une connexion à chemins multiples le long d'un chemin précédemment considéré comme incompatible avec une telle connexion, si les circonstances qui ont précédemment causé un repli vers une connexion TCP simple ont changé.

On notera que l'invention vise notamment le cas où il existe au moins deux chemins de communication *possibles* entre un premier dispositif-client et un second dispositif-client, même s'il n'existe qu'un seul chemin utilisable lors de l'initialisation d'une connexion TCP. De préférence, le procédé de communication selon l'invention sera mis en œuvre pour *chacun* des chemins de communication possibles entre les deux dispositifs-clients, suite à la découverte de ce chemin par l'un ou l'autre de ces dispositifs-clients ; on bénéficiera ainsi au maximum des possibilités offertes par les connexions à chemins multiples.

Corrélativement, l'invention concerne un dispositif communicant défini dans la revendication 6.

Un mode de réalisation non revendiqué concerne par ailleurs un dispositif communicant possédant des moyens pour mettre en œuvre une connexion TCP simple ou une connexion à chemins multiples. Ledit dispositif est remarquable en ce qu'il possède en outre des moyens pour :
- recevoir, en l'absence de toute connexion à chemins multiples entre ledit dispositif communicant et un certain autre dispositif communicant, des informations concernant la compatibilité éventuelle avec les connexions à chemins multiples d'au moins un nœud intermédiaire placé sur un chemin reliant ledit dispositif communicant audit autre dispositif communicant, et
- enregistrer le statut dudit chemin quant à sa compatibilité éventuelle avec les connexions à chemins multiples.

Selon des caractéristiques particulières, ledit dispositif communicant comprend en outre des moyens pour :
- émettre une requête à destination dudit nœud intermédiaire, et
- recevoir lesdites informations au sein d'un message de réponse émis par le noeud intermédiaire.

Selon d'autres caractéristiques particulières, ledit dispositif communicant comprend un dispositif-client, tel qu'un terminal d'utilisateur.

Selon des caractéristiques encore plus particulières, ledit dispositif communicant comprend en outre des moyens pour :
- constater qu'aucun chemin reliant ledit dispositif communicant audit autre dispositif-client n'est compatible avec les connexions à chemins multiples, et
- utiliser une connexion TCP simple pour :
   - établir une connexion avec l'autre dispositif-client, ou
   - se connecter à l'autre dispositif-client, suite à la réception d'un message d'établissement d'une connexion à chemins multiples émis par l'autre dispositif-client.

Selon d'autres caractéristiques encore plus particulières, ledit dispositif communicant comprend en outre des moyens pour :
- constater qu'au moins un chemin reliant ledit dispositif communicant audit autre dispositif-client est compatible avec les connexions à chemins multiples, et
- utiliser un protocole de connexion à chemins multiples pour communiquer avec l'autre dispositif-client le long dudit chemin compatible avec les connexions à chemins multiples.

Selon d'autres caractéristiques particulières, ledit dispositif communicant comprend un dispositif-relais, tel qu'un routeur ou une passerelle résidentielle, connecté à un dispositif-client.

Selon des caractéristiques encore plus particulières, ledit dispositif communicant comprend en outre des moyens pour :
- constater qu'aucun chemin le reliant audit autre dispositif-client n'est compatible avec les connexions à chemins multiples, et
- s'il reçoit un message d'initialisation de connexion à chemins multiples de la part dudit dispositif-client à l'intention de l'autre dispositif-client, répondre au dispositif-client sans utiliser de protocole de connexion à chemins multiples dans sa réponse.

Grâce à ces dispositions, le dispositif-client auquel le dispositif-relais est connecté bascule alors sans délai vers une connexion TCP simple.

Les avantages offerts par ces dispositifs communicants sont essentiellement les mêmes que ceux offerts par les procédés corrélatifs succinctement exposés ci-dessus.

Un mode de réalisation non revendiqué concerne aussi, deuxièmement, un nœud d'un réseau IP. Ledit nœud est remarquable en ce qu'il comprend des moyens pour diffuser des messages non-sollicités contenant des informations concernant la compatibilité éventuelle dudit nœud avec les connexions à chemins multiples.

En variante, ledit nœud comprend des moyens pour :
- recevoir de la part d'un dispositif communicant, en l'absence de toute connexion à chemins multiples établie par ledit dispositif communicant sur un chemin passant par ledit nœud, une requête concernant la compatibilité éventuelle du nœud avec les connexions à chemins multiples, et
- répondre audit dispositif communicant au moyen d'un message contenant des informations concernant la compatibilité éventuelle du nœud avec les connexions à chemins multiples.

On notera qu'un nœud peut être apte à mettre en oeuvre les deux variantes succinctement exposées ci-dessus, ou seulement l'une d'entre elles.

Ces nœuds peuvent par exemple comprendre un NAT ou un pare-feu.

Les avantages offerts par ces nœuds sont essentiellement les mêmes que ceux offerts par les procédés corrélatifs succinctement exposés ci-dessus.

On notera qu'il est possible de réaliser ces divers dispositifs dans le contexte d'instructions logicielles et/ou dans le contexte de circuits électroniques.

L'invention vise également un programme d'ordinateur défini dans la revendication 13, téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes du procédé de communication succinctement exposé ci-dessus, lorsqu'il est exécuté sur un ordinateur.

Les avantages offerts par ce programme d'ordinateur sont essentiellement les mêmes que ceux offerts par ledit procédé.

L'invention vise également un moyen de stockage de données défini dans la revendication 12.

D'autres aspects et avantages apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente un agrégat de sous-sessions TCP formant une unique connexion MPTCP,
- la figure 2, décrite ci-dessus, représente l'échec d'une tentative d'établissement d'une sous-session MPTCP vers le terminal B à partir d'un terminal A, suite au filtrage des options MPTCP par des nœuds intermédiaires,
- la figure 3, décrite ci-dessus, représente l'échec d'une tentative d'établissement d'une sous-session MPTCP vers le terminal B à partir d'un terminal A, suite au filtrage des options DSS par des nœuds intermédiaires,
- la figure 4 illustre un exemple d'application de l'invention à une configuration de réseau comprenant trois terminaux T1, T2 et T3,
- la figure 5 illustre les sous-sessions TCP établies entre les terminaux T1 et T3 de la figure 4, et
- la figure 6 illustre un exemple d'application de l'invention à une configuration de réseau comprenant un terminal placé derrière un dispositif-relais.

La découverte des divers chemins connectant un terminal donné à un correspondant donné peut être réalisée, par exemple, à l'aide d'un protocole d'allocation dynamique d'adresses IP comme DHCP (Dynamic Host Configuration Protocol), ou par un mécanisme de création de *mapping,* tel que PCP (Port Control Protocol), UPnP (Universal Plug and Play), IGD (Internet Gateway Device), ou STUN (Session Traversal Utilities for NAT). On rappelle à cet égard que l'on appelle « *mapping* » l'association d'une adresse IP interne et d'un numéro de port interne avec une adresse IP externe et un numéro de port externe. Dans le cas d'une fonction NAT, l'adresse IP interne et le numéro de port interne sont les informations servant de données d'entrée, alors que l'adresse IP externe et le numéro de port externe sont alloués par la fonction NAT. Dans le cas d'un pare-feu, les informations internes et externes sont identiques. Un *mapping* peut inclure d'autres informations, telles que l'adresse IP et le numéro de port du correspondant ou un identifiant du protocole de communication utilisé.

On notera que l'invention peut être mise en œuvre à la fois par un premier dispositif-client et par un deuxième dispositif-client avec lequel le premier dispositif-client souhaite établir une connexion à chemins multiples, ou par seulement par l'un d'entre eux ; dans le second cas, l'autre dispositif-client peut alors éventuellement mettre en œuvre un autre procédé que le procédé selon l'invention pour connaître la compatibilité des chemins reliant ces deux dispositifs-clients avec les connexions à chemins multiples.

L'invention propose un nouvel attribut à inclure dans les tables de connexion à chemins multiples. Cet attribut, que l'on appellera « PATH_CHECKED » est valorisé à « 1 » pour indiquer qu'une sous-session TCP est compatible avec les extensions à chemins multiples, et valorisé à « 0 » dans le cas contraire.

L'invention s'applique de manière générale à tout protocole concernant les connexions à chemins multiples. On va décrire à présent l'application de l'invention au protocole MPTCP décrit succinctement ci-dessus. En particulier, l'API MPTCP, mentionnée ci-dessus, doit être modifiée pour que l'on puisse transmettre aux applications la valeur de l'attribut PATH_CHECKED selon l'invention.

Le protocole MPTCP comprend classiquement un certain nombre de dispositions, dont notamment la définition des options TCP suivantes :
- MP_CAPABLE : cette option est utilisée pour signaler au terminal distant que le terminal émetteur est compatible avec les options MPTCP ;
- ADD_ADDR : cette option est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAlL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

On va décrire à présent un mode de réalisation du procédé de communication selon l'invention. Ce mode de réalisation, que l'on suppose mis en œuvre par un terminal T capable d'exploiter les ressources du protocole MPTCP, comprend les étapes suivantes.

Lors d'une étape E1, le terminal T reçoit des informations concernant les capacités, en termes de compatibilité avec les options MPTCP, de nœuds intermédiaires (par exemple, NAT, pare-feu, et ainsi de suite) placés en coupure de flux sur des chemins permettant d'atteindre le terminal.

Selon une première variante (mode « ANNONCE »), un nœud intermédiaire diffuse des informations concernant sa compatibilité éventuelle avec les options MPTCP à l'aide de messages du type prévu, par exemple, par le protocole SLP (Service Location Protocol) ou du type ANNOUNCE PCP (Port Control Protocol). Chaque message de ce type contient un indicateur (MPTCP_STATUS) servant à notifier aux terminaux la compatibilité du nœud intermédiaire avec les connexions MPTCP. Le nœud intermédiaire émet ces messages, par exemple, à fréquence régulière (par exemple, 30 minutes), ou en cas de démarrage ou de redémarrage du nœud intermédiaire, ou en cas de mise à jour logicielle ou de modification de configuration du nœud intermédiaire, ou encore suite à la détection de l'attachement d'un terminal au réseau.

Selon une deuxième variante (mode « PULL »), le terminal T procède d'abord à la découverte de nœuds intermédiaires, puis émet une requête à destination de chaque nœud intermédiaire ainsi découvert (par exemple en utilisant un protocole comme PCP) afin de récupérer des informations concernant la compatibilité éventuelle du nœud intermédiaire avec les options MPTCP. En réponse à une telle requête, le nœud intermédiaire répond avec un message contenant un indicateur (MPTCP_STATUS) servant à notifier au terminal requérant son statut concernant la compatibilité de ce nœud intermédiaire avec les connexions MPTCP.

Cet indicateur MPTCP_STATUS peut par exemple être défini de la manière suivante. La valeur « 0 » indique que toutes les options MPTCP sont filtrées (c'est-à-dire, supprimées) par le nœud intermédiaire. La valeur « 1 » indique que le nœud intermédiaire est capable d'interpréter toutes les options MPTCP. D'autres valeurs que « 0 » ou « 1 » peuvent être définies pour indiquer explicitement la liste des options que le nœud intermédiaire est capable d'interpréter, au cas où le nœud intermédiaire filtrerait seulement certaines des options MPTCP.

Lors d'une étape E2, le terminal enregistre, pour chaque nœud intermédiaire découvert, le fait que ledit chemin est compatible ou non avec les connexions MPTCP. Dans le présent mode de réalisation :
- si MPTCP _STATUS==1, le chemin qui passe par ce nœud intermédiaire est déclaré compatible avec l'établissement et l'utilisation de connexions MPTCP ; le terminal T met à jour sa table de connexion MPTCP en positionnant l'attribut PATH_CHECKED à « 1 » pour indiquer que ce chemin est compatible avec le mode de communication à chemins multiples ;
- si MPTCP _STATUS!=1, le chemin qui passe par ce nœud intermédiaire est déclaré incompatible avec les communications MPTCP ; le terminal T met à jour sa table de connexion MPTCP en positionnant l'attribut PATH_CHECKED à « 0 » pour indiquer que ce chemin n'est pas compatible avec le mode de communication à chemins multiples.

Ensuite, lors de chaque attachement à un nouveau réseau ou lorsqu'un nouveau nœud intermédiaire est détecté, le terminal T met en œuvre l'étape E3 suivante :
- si aucun des chemins permettant d'atteindre le terminal T n'est compatible avec les connexions MPTCP (c'est-à-dire, si l'attribut PATH_CHECKED de tous les chemins multiples est valorisé à « 0 ») :
   ∘ le terminal T utilise le mode de transport TCP simple pour établir des connexions *sortantes* avec ses correspondants TCP (i.e., le mode TCP à chemins multiples est désactivé par ce terminal tant que les conditions d'attachement au réseau ne sont pas favorablement modifiées), et
   ∘ pour une connexion à chemins multiples *entrante,* le terminal T n'inclut pas d'options MPTCP dans ses messages à destination de son correspondant (autrement dit, le terminal se comporte comme s'il n'était pas compatible avec MPTCP) ; suite à la réception d'un tel message sans options MPTCP par le correspondant du terminal T1, le correspondant bascule sans délai vers une connexion TCP simple, conformément au « mode repli » classique ; et
- s'il existe au moins un chemin compatible avec les connexions MTPCP (c'est-à-dire, si l'attribut PATH_CHECKED d'au moins un des chemins multiples est valorisé à « 1 »), le terminal T utilise les options MPTCP pour établir des connexions à chemins multiples avec un correspondant le long des chemins compatibles ; ce faisant, le terminal T s'abstient d'annoncer à ce correspondant les éventuels chemins incompatibles avec les connexions MPTCP, de manière à éviter l'échec d'une tentative d'établissement d'une connexion à chemins multiples le long d'un de ces chemins incompatibles.

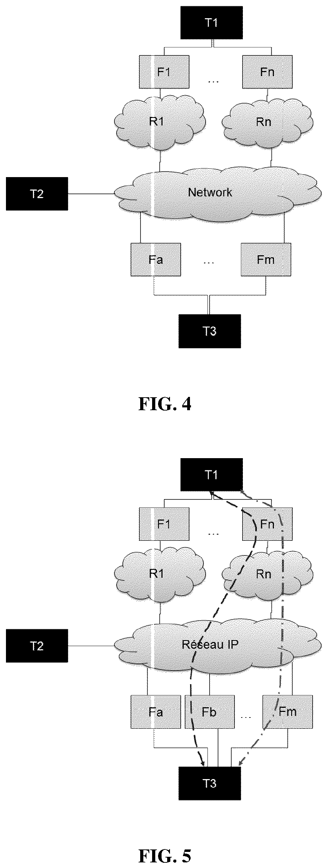

La **figure** 4 illustre un exemple d'application de l'invention à une configuration de réseau comprenant trois terminaux T1, T2 et T3. On voit sur cette figure :
- un terminal T1 connecté à un ou plusieurs réseau(x) IP via n nœuds de raccordement (F1, F2, ..., Fn) et n réseaux d'accès R1, R2, ..., Rn respectifs ; ces nœuds de raccordement peuvent héberger des fonctions NAT, pare-feu, et ainsi de suite, ou être des routeurs IP qui n'embarquent aucune fonction service avancée telle qu'un NAT ou un pare-feu ;
- un terminal T2 connecté à un réseau IP via un seul nœud de raccordement; on suppose que T2 est compatible avec MPTCP, et qu'une adresse IP unique lui a été allouée ; et
- un terminal T3 connecté à un ou plusieurs réseau(x) IP via m nœuds de raccordement (Fa, Fb, ..., Fm) ; ces nœuds peuvent héberger des fonctions NAT, pare-feu, et ainsi de suite, ou être des routeurs IP qui n'embarquent aucune fonction service avancée telle qu'un NAT ou un pare-feu.

Le terminal T1 initialise la procédure de détection de capacités fonctionnelles selon le présent mode de réalisation. A l'issue de cette procédure, T1 conclut que :
∘F1 filtre les options MPTCP,
∘F2 ne filtre que les options MPTCP des paquets de données, et
∘Fn ne filtre ni ne modifie aucune des options MPTCP.

T3 initialise la procédure de détection de capacités fonctionnelles selon le présent mode de réalisation. A l'issue de cette procédure, T3 conclut que :
∘Fa filtre les options MPTCP,
∘ Fb ne filtre ni ne modifie aucune des options MPTCP, et
∘Fm ne filtre ni ne modifie aucune des options MPTCP.

Les chemins MPTCP valides entre T1 et T3 sont alors les suivants :
- le chemin passant par Fn et Fb, et
- le chemin passant par Fn et Fm.

Les terminaux T1 et T3 ne pourront pas utiliser MPTCP si d'autres chemins que ces deux chemins sont sélectionnés pour échanger des données entre T1 et T3.

Supposons à présent que le terminal T1 veuille établir une connexion MPTCP avec le terminal T3. La **figure 5** illustre les sous-sessions TCP établies entre T1 et T3.

Le terminal T1 indique à son correspondant qu'il est compatible avec les connexions MPTCP, mais n'annonce que le chemin qui implique Fn. Le terminal T3 indique à son correspondant qu'il est compatible avec les connexions à chemins multiples, mais n'annonce que les chemins qui impliquent Fb et Fm. Ainsi, T1 et T3 peuvent établir :
- une sous-session TCP impliquant Fn (côté T1) et Fb (côté T3), et
- une sous-session TCP impliquant Fn (côté T1) et Fm (côté T3).

Supposons que le terminal T1 veuille établir une connexion MPTCP avec le terminal T2.

Le terminal T1 indique à son correspondant qu'il est compatible avec les connexions MPTCP, mais n'annonce que le chemin qui implique Fn. Le terminal T2 indique à son correspondant qu'il est compatible avec les connexions à chemins multiples. Ainsi, T1 et T2 peuvent établir des sous-sessions TCP impliquant Fn (côté T1). T1 et T2 peuvent utiliser des numéros de port différents pour créer de nouvelles sous-sessions associées à la connexion MPTCP à chemins multiples.

Supposons que le terminal T3 veuille établir une connexion MPTCP avec le terminal T2.

Le terminal T3 indique à son correspondant qu'il est compatible avec les connexions MPTCP, mais n'annonce que les chemins qui impliquent Fb et Fm. Le terminal T2 indique à son correspondant qu'il est compatible avec les connexions à chemins multiples. Ainsi, T3 et T2 peuvent établir des sous-sessions TCP impliquant Fb et Fm (côté T3).

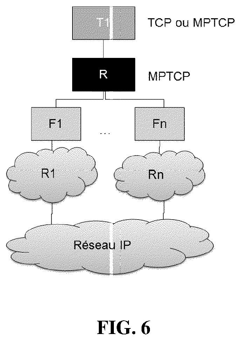

La **figure** 6 illustre un exemple d'application de l'invention à une configuration de réseau comprenant un terminal T1 compatible ou non avec MPTCP et placé derrière un dispositif-relais R, tel qu'un routeur ou une passerelle résidentielle, compatible avec MPTCP.

Ce dispositif-relais R est connecté à un, ou plusieurs réseau(x) IP via n nœuds de raccordement (F1, F2, ..., Fn) et n réseaux d'accès R1, R2, ..., Rn respectifs ; ces nœuds de raccordement peuvent héberger des fonctions NAT, pare-feu, et ainsi de suite, ou être des routeurs IP qui n'embarquent aucune fonction service avancée telle qu'un NAT ou un pare-feu.

Le dispositif-relais R met en œuvre la présente invention pour communiquer avec des terminaux distants. Le dispositif-relais R annonce ses capacités fonctionnelles au terminal T1, en fonction des capacités fonctionnelles des fonctions Fi découvertes par le dispositif-relais R. Pour ce faire, il procède comme suit :
- si au moins un des chemins multiples connus du dispositif-relais R est compatible avec les connexions MPTCP (c'est-à-dire, si l'attribut PATH_CHECKED d'au moins un des chemins multiples est valorisé à « 1 »), le dispositif-relais R envoie au terminal T1 un message de notification comprenant la mention : MPTCP _STATUS=1 ;
- si aucun des chemins multiples connus du dispositif-relais R n'est compatible avec les connexions MPTCP (c'est-à-dire, si l'attribut PATH_CHECKED de tous les chemins multiples est valorisé à « 0 »), le dispositif-relais R envoie au terminal T1 un message de notification comprenant la mention : MPTCP_STATUS!=1.

Lorsque le terminal T1 initialise une connexion à chemins multiples :
- le dispositif-relais R achemine les paquets de données en utilisant le, ou les, chemin(s) dont l'attribut PATH_CHECKED est positionné à « 1 » ;
- si le dispositif-relais R ne dispose d'aucun chemin compatible avec les connexions MPTCP, et s'il reçoit néanmoins un message d'initialisation de connexion à chemins multiples de la part du terminal T1 (ceci peut en effet se produire dans le cas où le terminal T1 n'est pas capable d'interpréter la mention MPTCP_STATUS!=1 reçue précédemment de la part du dispositif-relais R), le dispositif-relais R selon l'invention ne transmet pas ce message d'initialisation à son destinataire ; de plus, le dispositif-relais R selon l'invention répond au terminal T1 (en se faisant ainsi passer pour le correspondant du terminal T1) sans inclure aucune option MPTCP dans sa réponse ; T1 bascule alors sans délai vers une connexion TCP simple, conformément au « mode repli » classique.

L'invention peut être mise en œuvre au sein de nœuds de réseaux de communications, par exemple des terminaux, des routeurs, des passerelles, des NAT ou des pare-feux, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de communication selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication comprenant les étapes suivantes :
a) un dispositif communicant (T1,R), ledit dispositif communicant étant un dispositif-client (T1) apte à mettre en œuvre une connexion TCP, Transmission Control Protocol, simple ou une connexion à chemins multiples obéissant à un protocole de transport du modèle OSI, ou un dispositif-relais (R) connecté audit dispositif-client (T1) et apte à mettre en œuvre une connexion à chemins multiples obéissant audit protocole de transport, reçoit (E1), en l'absence de toute connexion à chemins multiples obéissant audit protocole de transport entre ledit dispositif communicant (T1,R) et un autre dispositif-client (T2, T3) et avant de tenter d'établir une connexion à chemins multiples obéissant audit protocole de transport entre ledit dispositif communicant et ledit autre dispositif-client, des informations (MPTCP_STATUS) concernant la compatibilité avec des options dudit protocole de transport concernant des connexions à chemins multiples d'au moins un nœud intermédiaire placé sur un chemin reliant ledit dispositif communicant (T1,R) audit autre dispositif-client (T2, T3), et
b) si lesdites informations reçues par le dispositif communicant (T1,R) indiquent qu'au moins un chemin reliant le dispositif-client (T1) audit autre dispositif-client (T2, T3) est compatible avec des connexions à chemins multiples obéissant audit protocole de transport, le dispositif communicant (T1,R) utilise un protocole de connexion à chemins multiples pour communiquer avec ledit autre dispositif-client (T2, T3) le long dudit chemin compatible.

2. Procédé de communication selon la revendication 1, **caractérisé en ce que**, lors de ladite étape a), ledit dispositif communicant (T1,R) reçoit lesdites informations (MPTCP_STATUS) au sein d'un message non-sollicité diffusé par ledit au moins un nœud intermédiaire.

3. Procédé de communication selon la revendication 1, **caractérisé en ce que** ledit dispositif communicant (T1,R) émet une requête à destination dudit au moins un nœud intermédiaire, et **en ce que**, lors de ladite étape a), il reçoit lesdites informations (MPTCP_STATUS) au sein d'un message de réponse émis par ledit au moins un nœud intermédiaire.

4. Procédé de communication selon l'une quelconque des revendications 1 à 3, **caractérisé en ce que**, si ledit dispositif communicant(T1,R) constate qu'aucun chemin reliant le dispositif-client (T1) audit autre dispositif-client (T2, T3) n'est compatible avec des connexions à chemins multiples obéissant audit protocole de transport, le procédé comprend en outre une étape (E3) au cours de laquelle le dispositif-client (T1) utilise une connexion TCP simple pour :
- établir une connexion avec ledit autre dispositif-client (T2, T3), ou
- se connecter à l'autre dispositif-client (T2, T3), suite à la réception d'un message d'établissement d'une connexion à chemins multiples obéissant audit protocole de transport émis par l'autre dispositif-client (T2, T3).

5. Procédé de communication selon l'une quelconque des revendications 1 à 4, **caractérisé en ce que** ladite connexion à chemins multiples obéissant audit protocole de transport met en œuvre le protocole MPTCP, Multi-Path TCP.

6. Dispositif communicant possédant des moyens pour mettre en œuvre une connexion TCP, Transmission Control Protocol, simple ou une connexion à chemins multiples obéissant à un protocole de transport du modèle OSI, ledit dispositif communicant possédant en outre des moyens pour :
- recevoir, en l'absence de toute connexion à chemins multiples obéissant audit protocole de transport entre ledit dispositif communicant et un autre dispositif client et avant de tenter d'établir une connexion à chemins multiples obéissant audit protocole de transport entre ledit dispositif communicant et ledit autre dispositif-client, des informations (MPTCP_STATUS) concernant la compatibilité avec des options dudit protocole de transport concernant des connexions à chemins multiples d'au moins un nœud intermédiaire placé sur un chemin reliant ledit dispositif communicant audit autre dispositif-client, et
- si les informations reçues par le dispositif communicant indiquent qu'au moins un chemin reliant le dispositif-client (T1) audit autre dispositif-client (T2, T3) est compatible avec des connexions à chemins multiples obéissant audit protocole de transport, utiliser un protocole de transport de connexion à chemins multiples pour communiquer avec ledit autre dispositif-client (T2, T3) le long dudit chemin compatible.

7. Dispositif communicant selon la revendication 6, **caractérisé en ce qu'**il comprend en outre des moyens pour :
- émettre une requête à destination dudit au moins un noeud intermédiaire, et
- recevoir lesdites informations (MPTCP_STATUS) au sein d'un message de réponse émis par ledit au moins un noeud intermédiaire.

8. Dispositif communicant selon la revendication 6 ou la revendication 7, **caractérisé en ce qu'**il comprend un dispositif-client (T1, T2, T3).

9. Dispositif communicant selon la revendication 8, **caractérisé en ce qu'**il comprend en outre des moyens pour :
- constater qu'aucun chemin reliant ledit dispositif client audit autre dispositif-client n'est compatible avec des connexions à chemins multiples obéissant audit protocole de transport, et
- utiliser une connexion TCP simple pour :
• établir une connexion avec l'autre dispositif-client, ou
• se connecter à l'autre dispositif-client, suite à la réception d'un message d'établissement d'une connexion à chemins multiples obéissant audit protocole de transport émis par l'autre dispositif-client.

10. Dispositif communicant selon la revendication 6 ou la revendication 7, **caractérisé en ce qu'**il comprend un dispositif-relais (R) connecté à un dispositif-client (T1).

11. Dispositif communicant selon la revendication 10, **caractérisé en ce qu'**il comprend en outre des moyens pour :
- constater qu'aucun chemin le reliant audit autre dispositif-client n'est compatible avec des connexions à chemins multiples obéissant audit protocole de transport, et
- s'il reçoit un message d'initialisation de connexion à chemins multiples obéissant audit protocole de transport de la part dudit dispositif-client (T1) à l'intention de l'autre dispositif-client, répondre au dispositif-client (T1) sans utiliser de protocole de connexion à chemins multiples obéissant audit protocole de transport dans sa réponse.

12. Moyen de stockage de données inamovible, ou partiellement ou totalement amovible, comportant des instructions de code de programme informatique qui, lorsqu'elles sont exécutées par un ordinateur ou par un microprocesseur, conduisent celui-ci à mettre en œuvre les étapes d'un procédé de communication selon l'une quelconque des revendications 1 à 5.

13. Programme d'ordinateur téléchargeable depuis un réseau de communications et/ou stocké sur un support lisible par ordinateur et/ou exécutable par un microprocesseur, ledit programme d'ordinateur comprenant des instructions pour l'exécution des étapes d'un procédé de communication selon l'une quelconque des revendications 1 à 5, lorsqu'il est exécuté sur un ordinateur ou par un microprocesseur.

## Patentansprüche

1. Kommunikationsverfahren, umfassend die folgenden Schritte:
a) eine Kommunikationsvorrichtung (T1,R), wobei die Kommunikationsvorrichtung eine Client-Vorrichtung (T1) ist, die geeignet ist, eine einfache TCP-Verbindung, Transmission Control Protocol, oder eine ein Transportprotokoll des OSI-Modells befolgende Multipath-Verbindung anzuwenden, oder eine Relais-Vorrichtung (R), die mit der Client-Vorrichtung (T1) verbunden ist und geeignet ist, eine das Transportprotokoll befolgende Multipath-Verbindung anzuwenden, empfängt (E1), in Abwesenheit jeder das Transportprotokoll befolgenden Multipath-Verbindung zwischen der Kommunikationsvorrichtung (T1,R) und einer anderen Client-Vorrichtung (T2, T3) und vor dem Versuch, eine das Transportprotokoll befolgende Multipath-Verbindung zwischen der Kommunikationsvorrichtung und der anderen Client-Vorrichtung aufzubauen, Informationen (MPTCP_STATUS) betreffend die Kompatibilität mit Optionen des Transportprotokolls betreffend Multipath-Verbindungen mindestens eines Zwischenknotens, der auf einem Pfad angeordnet ist, der die Kommunikationsvorrichtung (T1,R) mit der anderen Client-Vorrichtung (T2, T3) verbindet, und
b) wenn die von der Kommunikationsvorrichtung (T1,R) empfangenen Informationen angeben, dass mindestens ein die Client-Vorrichtung (T1) mit der anderen Client-Vorrichtung (T2, T3) verbindender Pfad mit das Transportprotokoll befolgenden Multipath-Verbindungen kompatibel ist, verwendet die Kommunikationsvorrichtung (T1,R) ein Multipath-Verbindungsprotokoll, um entlang des kompatiblen Pfads mit der anderen Client-Vorrichtung (T2, T3) zu kommunizieren.

2. Kommunikationsverfahren nach Anspruch 1, **dadurch gekennzeichnet, dass** die Kommunikationsvorrichtung (T1,R) beim Schritt a) die Informationen (MPTCP_STATUS) in einer von dem mindestens einen Zwischenknoten verbreiteten nicht angeforderten Nachricht empfängt.

3. Kommunikationsverfahren nach Anspruch 1, **dadurch gekennzeichnet, dass** die Kommunikationsvorrichtung (T1,R) eine Anfrage an den mindestens einen Zwischenknoten sendet und dass sie beim Schritt a) die Informationen (MPTCP_STATUS) in einer von dem mindestens einen Zwischenknoten gesendeten Antwortnachricht empfängt.

4. Kommunikationsverfahren nach einem der Ansprüche 1 bis 3, **dadurch gekennzeichnet, dass**, wenn die Kommunikationsvorrichtung (T1,R) feststellt, dass kein die Client-Vorrichtung (T1) mit der anderen Client-Vorrichtung (T2, T3) verbindender Pfad mit das Transportprotokoll befolgenden Multipath-Verbindungen kompatibel ist, das Verfahren ferner einen Schritt (E3) umfasst, bei dem die Client-Vorrichtung (T1) eine einfache TCP-Verbindung verwendet, um:
- eine Verbindung zu der anderen Client-Vorrichtung (T2, T3) aufzubauen, oder
- sich nach dem Empfangen einer von der anderen Client-Vorrichtung (T2, T3) gesendeten Aufbaunachricht einer das Transportprotokoll befolgenden Multipath-Verbindung mit der anderen Client-Vorrichtung (T2, T3) zu verbinden.

5. Kommunikationsverfahren nach einem der Ansprüche 1 bis 4, **dadurch gekennzeichnet, dass** die das Transportprotokoll befolgende Multipath-Verbindung das Protokoll MPTCP, Multi-Path TCP, anwendet.

6. Kommunikationsvorrichtung, die Einrichtungen besitzt, um eine einfache TCP-Verbindung, Transmission Control Protocol, oder eine ein Transportprotokoll des OSI-Modells befolgende Multipath-Verbindung anzuwenden, wobei die Kommunikationsvorrichtung ferner Einrichtungen besitzt, um:
- in Abwesenheit jeder das Transportprotokoll befolgenden Multipath-Verbindung zwischen der Kommunikationsvorrichtung und einer anderen Client-Vorrichtung und vor dem Versuch, eine das Transportprotokoll befolgende Multipath-Verbindung zwischen der Kommunikationsvorrichtung und der anderen Client-Vorrichtung aufzubauen, Informationen (MPTCP_STATUS) betreffend die Kompatibilität mit Optionen des Transportprotokolls betreffend Multipath-Verbindungen mindestens eines Zwischenknotens, der auf einem Pfad angeordnet ist, der die Kommunikationsvorrichtung mit der anderen Client-Vorrichtung verbindet, zu empfangen, und
- wenn die von der Kommunikationsvorrichtung empfangenen Informationen angeben, dass mindestens ein die Client-Vorrichtung (T1) mit der anderen Client-Vorrichtung (T2, T3) verbindender Pfad mit das Transportprotokoll befolgenden Multipath-Verbindungen kompatibel ist, ein Multipath-Verbindungsprotokoll zu verwenden, um mit der anderen Client-Vorrichtung (T2, T3) entlang des kompatiblen Pfads zu kommunizieren.

7. Kommunikationsvorrichtung nach Anspruch 6, **dadurch gekennzeichnet, dass** sie ferner Einrichtungen umfasst, um:
- eine Anfrage an den mindestens einen Zwischenknoten zu senden, und
- die Informationen (MPTCP_STATUS) in einer von dem mindestens einen Zwischenknoten gesendeten Antwortnachricht zu empfangen.

8. Kommunikationsvorrichtung nach Anspruch 6 oder Anspruch 7, **dadurch gekennzeichnet, dass** sie eine Client-Vorrichtung (T1, T2, T3) umfasst.

9. Kommunikationsvorrichtung nach Anspruch 8, **dadurch gekennzeichnet, dass** sie ferner Einrichtungen umfasst, um:
- festzustellen, dass kein die Client-Vorrichtung mit der anderen Client-Verbindung verbindender Pfad mit das Transportprotokoll befolgenden Multipath-Verbindungen kompatibel ist, und
- eine einfache TCP-Verbindung zu verwenden, um:
• eine Verbindung zu der anderen Client-Vorrichtung aufzubauen, oder
• sich nach dem Empfangen einer von der anderen Client-Vorrichtung gesendeten Aufbaunachricht einer das Transportprotokoll befolgenden Multipath-Verbindung mit der anderen Client-Vorrichtung zu verbinden.

10. Kommunikationsvorrichtung nach Anspruch 6 oder Anspruch 7, **dadurch gekennzeichnet, dass** sie eine Relais-Vorrichtung (R) umfasst, die mit einer Client-Vorrichtung (T1) verbunden ist.

11. Kommunikationsvorrichtung nach Anspruch 10, **dadurch gekennzeichnet, dass** sie ferner Einrichtungen umfasst, um:
- festzustellen, dass kein sie mit der anderen Client-Verbindung verbindender Pfad mit das Transportprotokoll befolgenden Multipath-Verbindungen kompatibel ist, und
- wenn sie von der Client-Vorrichtung (T1) eine für die andere Client-Vorrichtung bestimmte Initialisierungsnachricht einer das Transportprotokoll befolgenden Multipath-Verbindung empfängt, der Client-Vorrichtung (T1) zu antworten, ohne in ihrer Antwort ein das Transportprotokoll befolgendes Multipath-Verbindungsprotokoll zu verwenden.

12. Nicht entnehmbares oder teilweise oder vollständig entnehmbares Datenspeichermedium, das EDV-Programmcodeanweisungen beinhaltet, die, wenn sie von einem Computer oder von einem Mikroprozessor ausgeführt werden, diesen veranlassen, die Schritte eines Kommunikationsverfahrens nach einem der Ansprüche 1 bis 5 anzuwenden.

13. Computerprogramm, das von einem Kommunikationsnetz herunterladbar ist und/oder auf einem computerlesbaren Medium gespeichert ist und/oder von einem Mikroprozessor ausführbar ist, wobei das Computerprogramm Anweisungen umfasst, die bei seiner Ausführung auf einem Computer oder einem Mikroprozessor die Schritte eines Kommunikationsverfahrens nach einem der Ansprüche 1 bis 5 ausführen.

## Claims

1. Communication method comprising the following steps:
a) a communicating device (T1,R), said communicating device being a client device (T1) capable of implementing a simple TCP, Transmission Control Protocol, connection or a multi-path connection obeying a transport protocol of the OSI model, or a relay device (R) connected to said client device (T1) and capable of implementing a multi-path connection obeying said transport protocol, receives (E1), in the absence of any multi-path connection obeying said transport protocol between said communicating device (T1,R) and another client device (T2, T3) and before trying to establish a multi-path connection obeying said transport protocol between said communicating device and said other client device, information (MPTCP_STATUS) concerning the compatibility with options of said transport protocol concerning multi-path connections of at least one intermediate node placed on a path linking said communicating device (T1,R) to said other client device (T2, T3), and
b) if said information received by the communicating device (T1,R) indicates that at least one path linking the client device (T1) to said other client device (T2, T3) is compatible with multi-path connections obeying said transport protocol, the communicating device (T1,R) uses a multi-path connection protocol to communicate with said other client device (T2, T3) along said compatible path.

2. Communication method according to Claim 1, **characterized in that**, during said step a), said communicating device (T1,R) receives said information (MPTCP_STATUS) in an unsolicited message broadcast by said at least one intermediate node.

3. Communication method according to Claim 1, **characterized in that** said communicating device (T1,R) transmits a request to said at least one intermediate node, and **in that**, during said step a), it receives said information (MPTCP_STATUS) in a response message transmitted by said at least one intermediate node.

4. Communication method according to any one of Claims 1 to 3, **characterized in that**, if said communicating device (T1,R) finds that no path linking the client device (T1) to said other client device (T2, T3) is compatible with multi-path connections obeying said transport protocol, the method further comprises a step (E3) during which the client device (T1) uses a simple TCP connection to:
- establish a connection with said other client device (T2, T3), or
- connect to the other client device (T2, T3), following the reception of a message of establishment of a multi-path connection obeying said transport protocol transmitted by the other client device (T2, T3).

5. Communication method according to any one of Claims 1 to 4, **characterized in that** said multi-path connection obeying said transport protocol implements the MPTCP, Multi-Path TCP, protocol.

6. Communicating device having means for implementing a simple TCP, Transmission Control Protocol, connection or a multi-path connection obeying a transport protocol of the OSI model, the communicating device having also means for:
- receiving, in the absence of any multi-path connection obeying said transport protocol between said communicating device and another client device and before trying to establish a multi-path connection obeying said transport protocol between said communicating device and said other client device, information (MPTCP_STATUS) concerning the compatibility with options of said transport protocol concerning multi-path connections of at least one intermediate node placed on a path linking said communicating device to said other client device, and
- if the information received by the communicating device indicates that at least one path linking the client device (T1) to said other client device (T2, T3) is compatible with multi-path connections obeying said transport protocol, using a multi-path connection transport protocol to communicate with said other client device (T2, T3) along said compatible path.

7. Communicating device according to Claim 6, **characterized in that** it further comprises means for:
- transmitting a request to said at least one intermediate node, and
- receiving said information (MPTCP_STATUS) in a response message transmitted by said at least one intermediate node.

8. Communicating device according to Claim 6 or Claim 7, **characterized in that** it comprises a client device (T1, T2, T3).

9. Communicating device according to Claim 8, **characterized in that** it further comprises means for:
- finding that no path linking said client device to said other client device is compatible with multi-path connections obeying said transport protocol, and
- using a simple TCP connection to:
• establish a connection with the other client device, or
• connect to the other client device, following the reception of a message of establishment of a multi-path connection obeying said transport protocol transmitted by the other client device.

10. Communicating device according to Claim 6 or Claim 7, **characterized in that** it comprises a relay device (R) connected to a client device (T1).

11. Communicating device according to Claim 10, **characterized in that** it further comprises means for:
- finding that no path linking it to said other client device is compatible with multi-path connections obeying said transport protocol, and
- if it receives a message of initialization of a multi-path connection obeying said transport protocol on behalf of said client device (T1) intended for the other client device, responding to the client device (T1) without using any multi-path connection protocol obeying said transport protocol in its response.

12. Data storage means that are non-removable, or partially or totally removable, comprising computer program code instructions which, when they are executed by a computer or by a microprocessor, cause the latter to implement the steps of a communication method according to any one of Claims 1 to 5.

13. Computer program that can be downloaded from a communication network and/or stored on a computer-readable medium and/or that can be executed by a microprocessor, said computer program comprising instructions for the execution of the steps of a communication method according to any one of Claims 1 to 5, when it is executed on a computer or on a microprocessor.
